# EUROPEAN PATENT SPECIFICATION

(11) **EP 3 683 910 B1**
(45) Date of publication and mention of the grant of the patent: **25.09.2024**
(21) Application number: 18856527.9
(22) Date of filing: 21.08.2018
(51) Int. Cl.: H02H 5/00, H02H 5/04, F04B 49/02, F04B 49/10, F04B 49/06, H02H 5/08, H02H 7/085

(54) **OVERLOAD PROTECTION APPARATUS AND METHOD, AND STORAGE MEDIUM, COMPRESSOR AND ELECTRIC APPLIANCE**
ÜBERLASTSCHUTZVORRICHTUNG UND -VERFAHREN UND SPEICHERMEDIUM, KOMPRESSOR UND ELEKTRISCHES GERÄT
APPAREIL ET PROCÉDÉ DE PROTECTION CONTRE LES SURCHARGES, ET SUPPORT D'INFORMATIONS, COMPRESSEUR ET APPAREIL ÉLECTRIQUE

(30) Priority: 15.09.2017 CN 201710832181
(43) Date of publication of application: 22.07.2020
(73) Proprietor: Gree Electric Appliances (Wuhan) Co., Ltd., Wuhan, Hubei 430056 (CN); Gree Electric Appliances, Inc. of Zhuhai, Zhuhai, Guangdong 519070 (CN)
(72) Inventor: XU, Qihua, Zhuhai, Guangdong 519070 (CN); ZHOU, Zhongliang, Zhuhai, Guangdong 519070 (CN); CHEN, Jun, Zhuhai, Guangdong 519070 (CN)
(74) Representative: Reddie & Grose LLP
(86) International application number: PCT/CN2018/101536
(87) International publication number: WO 2019/052317

(56) References cited:
- EP-A1- 2 175 135
- WO-A1-2004/033909
- WO-A2-01/99134
- CN-A- 107 611 926
- CN-U- 207 442 431
- CN-Y- 201 215 088
- JP-A- H08 261 160
- JP-B2- 3 188 890

## Description

### TECHNICAL FIELD

The present application relates to the technical field of overload protection, and particularly relates to an overload protection device and method, a storage medium, a compressor and an electric appliance; and particularly relates to an integrated pressure, temperature and current overload protector for air conditioner, a compressor with the overload protector, an electric appliance with the compressor, a protection method of the electric appliance, and a computer readable storage medium storing instructions of the protection method.

### BACKGROUND

An air conditioning system is a system that can control the temperature, humidity, cleanliness and airflow speed of indoor air. At present, for a compressor of a household air conditioning system, generally a current overload protector and a temperature overload protector is needed to prevent damage to a motor of the compressor due to overlarge current or excessive exhaust gas temperature, thus ensuring the compressor can operate normally. Moreover, a pressure switch is needed to be welded at a high pressure side of the air conditioning system. When the pressure of the high pressure side exceeds the maximum allowable pressure of the air conditioning system, the pressure switch is turned off to make the compressor stop running to protect the pipeline at the high pressure side.

In this way, at least two types of overload protectors are needed to be used in the air conditioning system to protect the air conditioning system. The control process of the overload protectors is cumbersome, the design of the air conditioning system is complicated, and the cost of the air conditioning system is high.

Defects such as cumbersome control process, complicated structure, high cost, and the like exist in the prior art.

EP2175135A1 provides a sealed electric compressor having a normally-off type pressure switch and a fuse element. The pressure switch is placed in a sealed housing, connected parallel to a main winding of an electric motor, and, when the pressure of refrigerant in the sealed housing is abnormally high, activates to short-circuit the main winding. The fuse element is connected in series to the main winding and an auxiliary winding of the electric motor and interrupts conduction of electricity to the electric motor when an excess current that is produced when the pressure switch short-circuits the main winding flows.

WO0199134A2 provides a pressure switch for a compressor or similar apparatus which can supply a fluid under pressure and is driven by an electric motor. The pressure switch comprises a support structure, a diaphragm which is fixed to the support structure and is intended to be exposed to the pressurized fluid, electrical contacts mounted on the support structure and arranged for movement towards and away from one another between a position of closure and a position of opening of an electrical-supply circuit of the electric motor, a manually-operated control member movable between two positions in which the electrical contacts are in the positions of opening and of closure of the electrical circuit, and a lever mechanism operatively associated with the diaphragm and with the electrical contacts in a manner such that, when a pressure above a predetermined threshold value is applied to the diaphragm, the lever mechanism brings about movement of the electrical contacts to the opening position, and it comprises a temperature-sensitive thermal cut-out which is mounted on the support structure, in series with the electrical supply circuit of the motor, and is arranged to open the electrical-supply circuit automatically when the temperature exceeds a predetermined value, the cut-out being operable manually in order to be reset to a closure position which is stable when the temperature is below the predetermined value, and the cut-out being operatively associated with the control member in a manner such that the cut-out is reset to its closure position as a result of the movement of the control member to its position which brings about opening of the electrical contacts.

JP08261160A provides an overload protecting device constituted of an overcurrent detector, pressure switch, and thermal relay. In the overcurrent detector, its normally closed bimetal switch is interposed in one large current circuit. The pressure switch has a normally open type switch part, to constitute the switch part so as to be closed when detecting an overpressure. In the overload protecting device, a heating heater of the normally closed bimetal switch is provided in the overcurrent detector, and by connecting in series the pressure switch and the thermal relay to the heater, a small current circuit is formed. This small current circuit, placed in a parallel condition relating to the large current circuits, is connected to a power supply.

WO2004033909A1 provides an overload protective apparatus including a reference current setting unit for presetting a reference current value for operating the compressor normally; a microcomputer for generating a power cutoff signal when the detected current value is greater than the reference current value and generating a power supply signal when the detected current value is smaller than the reference current value; and a power supply unit for cutting off power applied to the compressor on the basis of the power cutoff signal or applying power to the compressor on the basis of the power supply signal.

### SUMMARY

The invention is defined in the appended independent claims, to which reference should now be made. Preferred or advantageous features of the invention are defined in dependent sub-claims.

The purpose of the present application is to provide an overload protection device and method, a storage medium, a compressor and an electric appliance to solve the problem of a cumbersome control process in the prior art due to that at least two types of overload protectors are needed to protect the air conditioning system, and to achieve the effect of simplifying the control process.

The present application provides an overload protection device, as set forth in claim. 1. In particular, the overload protection device comprises: a first overload protection mechanism and a second overload protection mechanism, wherein: the first overload protection mechanism is configured to provide overload protection for a pressure of a compressor to be protected; and/or, the second overload protection mechanism is configured to provide overload protection for at least one of a temperature or a current of the compressor to be protected.

The overload protection device further comprises a housing, wherein: the first overload protection mechanism and the second overload protection mechanism are adaptively installed in the housing, respectively; and/or, the housing is filled with an inert gas; and/or, the first overload protection mechanism and the second overload protection mechanism are integrally disposed, and/or, are disposed in series.

The first overload protection mechanism comprises: a pressure diaphragm, a transmission rod and a control switch, wherein: a first end of the transmission rod is adaptively in contact with the pressure diaphragm; a second end of the transmission rod is adaptively in contact with a control end of the control switch; and at least one fixed end of the control switch is adaptively connected to a power supply end of the compressor to be protected through the second overload protection mechanism.

The first overload protection mechanism further comprises a pressure sensing port; the pressure sensing port is adaptively disposed with the pressure diaphragm and is configured to allow refrigerant vapor of an exhaust end of the compressor to be protected to pass through and arrive at the pressure diaphragm, wherein the refrigerant vapor deforms the pressure diaphragm to force the transmission rod to move so as to turn on or turn off the control switch; and/or, in a case where the overload protection device comprises a housing, the pressure sensing port is adaptively disposed at a position of the housing opposite to the pressure diaphragm; and/or, the pressure sensing port communicates with an external environment of the first overload protection mechanism, and other parts of the first overload protection mechanism other than the pressure sensing port are all sealed.

The pressure diaphragm comprises a metal diaphragm; and/or, the control switch comprises a microswitch; and/or, the housing comprises a base and a shell cover, wherein: the base comprises a heat resistant resin base, and/or, the shell cover comprises a metal shell.

The second overload protection mechanism comprises at least one of a heater or a temperature contact piece, wherein: at least one connection end of the heater is adaptively connected to a power supply end of the compressor to be protected; and/or, at least one contact end of the temperature contact piece is adaptively connected to the power supply end of the compressor to be protected through a temperature contact adaptively disposed with the temperature contact piece.

The second overload protection mechanism further comprises: a first terminal and a second terminal, wherein: the first terminal and the second terminal are adaptively connected to the power supply end of the compressor to be protected, respectively; a first connection end of the heater is adaptively connected to the first overload protection mechanism, and a second connection end of the heater is adaptively connected to the first terminal; and/or, a first contact end of the temperature contact piece is fixedly disposed, and a second contact end of the temperature contact piece is adaptively connected to the second terminal through the temperature contact.

Optionally, the heater comprises a resistance wire; and/or, the temperature contact piece comprises a bimetal piece or a trimetal piece, the temperature contact piece is configured to deform when being heated, based on an environment temperature of the compressor to be protected, and/or a current of a motor of the compressor to be protected, to connect to or disconnect from the temperature contact; and/or, the temperature contact comprises a stationary contact and a movable contact, wherein the stationary contact is adaptively disposed with one end of the second terminal, and/or, the movable contact is adaptively disposed with the second contact end of the temperature contact; and/or, in a case where the overload protection device comprises a housing: the first terminal and the second terminal are respectively inserted into a base of the housing and protrude from the housing; and/or, the first contact end of the temperature contact piece is adaptively disposed on a shell wall of a shell cover of the housing, wherein the shell cover is in a shape of a cylinder or a quadrangular prism.

Corresponding to the above device, the application provides an overload protection method by using the above overload protection device, comprising: providing overload protection for a pressure of a compressor to be protected; and, providing overload protection for a temperature and a current of the compressor to be protected.

Optionally, providing overload protection for the pressure of the compressor to be protected comprises: in a case where the pressure of refrigerant vapor from an exhaust end of the compressor to be protected exceeds a set pressure range, a pressure diaphragm in the first overload protection mechanism deforms to force the transmission rod to move to turn off the control switch, so as to provide overload protection for the pressure of refrigerant vapor of the compressor to be protected; and/or, providing overload protection for at least one of the temperature or the current of the compressor to be protected comprises: in a case where an environment temperature of the compressor to be protected exceeds a set temperature range, a temperature contact piece in the second overload protection mechanism deforms to disconnect from the temperature contact, so as to provide overload protection for the temperature of the compressor to be protected; and/or, in a case where the current of a motor of the compressor to be protected exceeds a set current range, a heater in the second overload protection mechanism generates heat to deform the temperature contact piece and disconnect from the temperature contact, so as to provide overload protection for the current of the compressor to be protected.

The overload protection method further comprises: in a case where the pressure of refrigerant vapor does not exceed the set pressure range, an environment temperature does not exceed the set temperature range, and the current of the motor does not exceed the set current range, the compressor to be protected is powered and running.

Corresponding to the above method, the present application provides a storage medium in which a plurality of instructions is stored, wherein the plurality of instructions is configured to be loaded by a processor to execute the above overload protection method.

Corresponding to the above method, the present application provides a processor configured to run a program to execute the above overload protection method.

Corresponding to the above device or method, the present application provides a compressor, comprising: the above overload protection device; or, a memory configured to store a plurality of instructions; and a processor configured to load the plurality of instructions to execute the above overload protection method.

Optionally, the compressor comprises a rotor type invariable frequency compressor or a vortex type invariable frequency compressor; and/or, the overload protection device is adaptively installed in a top shell or a high pressure chamber of the compressor and is connected in series with a main circuit of a motor of the compressor.

Corresponding to the above compressor, the present application provides an electric appliance, comprising the above compressor.

Optionally, the electrical appliance comprises at least one of an air conditioner, a refrigerator or a water heater.

In the solutions of the present application, the overload protections of pressure, temperature and current and the like are integrated, the problems that the air conditioning system has excessive overload protectors and that the overload protection control is complicated are solved, and the control process is simple.

Further, in the solutions of the present application, the overload protections of pressure, temperature and current and the like are integrated, the number of overload protection components of the air conditioning system can be reduced, and the problem that the air conditioning system has excessive overload protectors is solved.

Further, in the solutions of the present application, the overload protections of pressure, temperature and current and the like are integrated, the overload protection control of the air conditioning system can be simplified, and the problem of cumbersome overload protection control of the air conditioning system can be solved.

Further, in the solutions of the present application, the overload protection of pressure, temperature and current and the like is integrated, the problem that the parts and components of the air conditioning system are complicated and excessive can be solved, the structure is simplified, and the cost is reduced.

Further, in the technical solutions of the present application, the overload protector integrating the overload protection of pressure, temperature and current and the like replaces the temperature and current overload protectors and the pressure controller disposed on the pipeline between exhausting gases and a condenser in the air conditioning system. The protection structure and the protection process of the air conditioning system are simplified, and the user experience is improved.

Therefore, in the solutions of the present application, the pressure, temperature and current overload protection structure are integrally disposed, the problem of a cumbersome control process in the prior art due to that at least two types of overload protectors are needed to protect the air conditioning system is solved. Accordingly, the defects of cumbersome control process, complicated structure and high cost in the prior art are overcome, and the beneficial effects of simple control process, simple structure and low cost are achieved.

Other features and advantages of the present application will be set forth in the following description, and partially become obvious from the description, or are understood by implementing the present application.

The technical solutions of the present application are further described in detail below with reference to drawings and embodiments.

### BRIEF DESCRIPTION OF THE DRAWINGS

Fig. 1 is a schematic structural diagram of an overload protection device according to one embodiment of the present application;
Fig. 2 is a schematic structural diagram of an overload protection device according to another embodiment of the present application.

In combination with the drawings, reference signs in the embodiments of the present application are as follows:
10-first overload protection mechanism; 11- pressure sensing port; 12-pressure diaphragm; 13-transmission rod; 14-microswitch; 20-second overload protection mechanism (i.e., current and/or temperature overload protection mechanism); 21-heater; 22-temperature contact piece; 23-temperature contact; 231-stationary contact; 232-movable contact; 24-first terminal; 25-second terminal; 30-housing; 32-shell cover (for example, metal shell cover); 31-base (for example, heat resistant resin base).

### DETAILED DESCRIPTION

In order that the purposes, technical solutions and advantages of the present application are clearer, a clear and complete description of technical solutions of the present application will be given below in combination with specific embodiments of the present application and corresponding drawings.

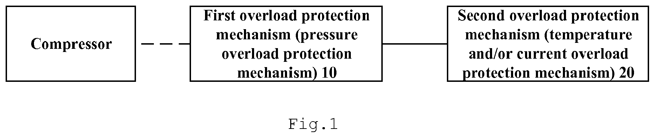

According to embodiments of the present application, an overload protection device is provided. Fig. 1 is a schematic structural diagram of an overload protection device according to one embodiment of the present application. The overload protection device comprises a first overload protection mechanism 10 and a second overload protection mechanism 20.

The first overload protection mechanism 10 is configured to provide overload protection for a pressure of a compressor to be protected.

The first overload protection mechanism 10 comprises a pressure diaphragm 12, a transmission rod 13 and a control switch.

A first end of the transmission rod 13 is adaptively in contact with the pressure diaphragm 12, and a second end of the transmission rod 13 is adaptively in contact with a control end of the control switch.

At least one fixed end of the control switch is adaptively connected to a power supply end of the compressor to be protected through the second overload protection mechanism 20.

Therefore, the pressure diaphragm, the transmission rod and the control switch are adaptively arranged, and pressure overload protection may be realized. Furthermore, the structure of the first overload protection mechanism 10 is simple, and the reliability of control of the first overload protection mechanism 10 is high.

More optionally, the pressure diaphragm 12 may comprise a metal diaphragm.

Thus, the touch sensitivity is high, and the reliability is high by using the metal diaphragm as the pressure diaphragm.

More optionally, the control switch may comprise a microswitch 14.

For example, a first fixed end of the microswitch 14 is connected to a shell cover 32 of a housing 30. A second fixed end of the microswitch 14 is adaptively connected to the power supply end of the compressor to be protected through a heater 21 and a first terminal 24.

Thus, the reaction sensitivity is high, and the accuracy is high by using the microswitch as the control switch.

The first overload protection mechanism 10 further comprises a pressure sensing port 11.

The pressure sensing port 11 is adaptively disposed with the pressure diaphragm 12 and is configured to allow the refrigerant vapor of an exhaust end of the compressor to be protected to pass and arrive at the pressure diaphragm 12. The pressure diaphragm 12 is deformed to force the transmission rod 13 to move, and the movement of the transmission rod 13 turns on or turns off the control switch.

For example, the high pressure refrigerant vapor acts on the metal pressure diaphragm through the pressure sensing port to deform the diaphragm. The deformed diaphragm forces the transmission rod to move, thus turning on or turning off the microswitch.

Thus, through the adaptive arrangement of the pressure sensing port: on one hand, the other elements in the first overload protection mechanism may be protected; and on the other hand, the pressure diaphragm may conveniently sense the exhaust pressure of the compressor. The structure is reasonable, and the control reliability is high.

According to the invention the device further comprises the housing 30, the pressure sensing port 11 is adaptively disposed at a position of the housing 30 opposite to the pressure diaphragm 12.

Thus, the structure is reasonable as the pressure sensing port is disposed at the position of the housing opposite to the pressure diaphragm.

In an optional specific example, the pressure sensing port 11 communicates with the external environment of the first overload protection mechanism 10, and other parts of the first overload protection mechanism 10 other than the pressure sensing port 11 are all sealed.

For example, the pressure sensing port of the pressure overload protector communicates with the outside, and other positions of the pressure overload protector other than the pressure sensing port are all sealed.

Thus, the pressure sensing port communicates the pressure sensing port with the outside and the other elements in the first overload protection mechanism are sealed. The first overload protection mechanism is compact in structure and convenient in pressure sensing, which is beneficial for improving the sensing reliability.

The second overload protection mechanism 20 is configured to provide overload protection on at least one of the temperature or the current of the compressor to be protected.

For example, the overload protection device may be an integrated pressure, temperature and current overload protector for air conditioner. The overload protector may integrate the overload protection of pressure, temperature, current, and the like. Thus, the problems that the air conditioning system has excessive overload protectors and that the overload protection control is complicated are solved.

Thus, the first overload protection mechanism may provide the pressure protection, and the second overload protection mechanism may provide the protection of at least one of the temperature or the current of. The overload protection of pressure, temperature, current, and the like may be integrated. The problems that the air conditioning system has excessive overload protectors and that the overload protection control is complicated are solved. The control process is simplified, and the structure is also simplified.

The second overload protection mechanism 20 comprises a heater 21 and a temperature contact piece 22.

At least one connection end of the heater 21 is adaptively connected to the power supply end of the compressor to be protected.

More optionally, the heater 21 may comprise a resistance wire.

For example, the heater itself is a resistance wire, which generates heat due to the thermal effect of the current. It can be seen from P=I²*R that in a case where the voltage is constant and the current I increases, the heating power P of the resistance wire increases. In a case where the current reaches the maximum allowable current, the heat generated by the resistance wire makes a bimetal piece or a trimetal piece deform and disconnect from a temperature contact.

Thus, the structure is simple, and the reliability of current sensing is high by using the resistance wire as the heater.

At least one contact end of the temperature contact piece 22 is adaptively connected to the power supply end of the compressor to be protected through a temperature contact 23 which is adaptively disposed with the temperature contact piece 22.

Thus, the overload protection of the current and the temperature may be realized through the adaptive arrangement of the heater and the temperature contact piece. The structure is simple, and the reliability is high.

More optionally, the temperature contact piece 22 may comprise a bimetal piece or a trimetal piece. The temperature contact piece 22 may be configured to deform when being heated, based on the environment temperature of the compressor to be protected, and/or the current of the motor of the compressor to be protected, thus connecting to or disconnecting from the temperature contact 23.

For example, the external temperature of the overload protector is abnormally high. In a case where the external temperature exceeds the maximum allowable temperature, the temperature and the deformation of the bimetal piece (or the trimetal piece) increases, so that the bimetal piece disconnects from the temperature contact. In a case where the temperature is lower than a set lower temperature limit, the bimetal piece connects to the temperature contact.

For example, the metal contact piece may comprise a bimetal piece or a trimetal piece. The functions of the bimetal piece and the trimetal piece are the same, and the trimetal piece is more sensitive. As a result, the trimetal piece gradually replaces the bimetal piece.

For example, since the bimetal piece or the trimetal piece is formed by laminating two or three metals with different thermal expansion coefficients, one side of the bimetal piece or the trimetal piece is bent, due to the difference of extension caused by the different thermal expansion coefficients during heating, to connect to or disconnect from the temperature contact point.

Thus, the sensitivity to temperature is high, and the reliability is high by using the bimetal piece or the trimetal piece as the temperature contact piece.

More optionally, the temperature contact 23 may comprise a stationary contact 231 and a movable contact 232.

In a more optional specific example, the stationary contact 231 is adaptively connected to one end of a second terminal 25.

In a more optional specific example, the movable contact 232 is adaptively connected to a second contact end of the temperature contact piece 22.

A first contact end of the temperature contact piece 22 is adaptively disposed on a shell wall of the shell cover 32 of the housing 30.

Thus, through the adaptive arrangement of the stationary contact and the movable contact, the contact or disconnection of the temperature contact piece and the temperature contact is more convenient. The reliability and sensitivity of the temperature control are improved.

The shell cover 32 is in a shape of a cylinder or a quadrangular prism.

Thus, the overload protection device may be applied to various occasions with the shell cover of various shapes. The application range is wide, the use flexibility is good, and the versatility is high.

Optionally, the second overload protection mechanism 20 may further comprise the first terminal 24 and the second terminal 25.

In an optional specific example, the first terminal 24 and the second terminal 25 are adaptively connected to the power supply end of the compressor to be protected, respectively.

In an optional specific example, a first connection end of the heater 21 is adaptively connected to the first overload protection mechanism 10. A second connection end of the heater 21 is adaptively connected to the first terminal 24.

In an optional specific example, the first contact end of the temperature contact piece 22 is fixedly disposed. The second contact end of the temperature contact piece 22 is adaptively connected to the second terminal 25 through the temperature contact 23.

Thus, through the adaptive arrangement of the terminals, the connection between the overload protection device and the compressor is more convenient, safe and reliable.

More optionally, the first terminal 24 and the second terminal 25 are respectively inserted into a base 31 of the housing 30 and protrude from the housing 30.

Thus, through the adaptive arrangement of the terminals and the housing, the mounting stability and the mounting reliability of the terminals may be improved.

In an optional example, the first overload protection mechanism 10 and the second overload protection mechanism 20 are integrally disposed.

In an optional example, the first overload protection mechanism 10 and the second overload protection mechanism 20 are disposed in series.

For example, the overload protection of pressure, temperature, current, and the like are integrated. The problems that the air conditioning system has excessive overload protectors, the overload protection control of the air conditioning system is complicated, and the components of the air conditioning system components are complicated and numerous can be solved. The number of overload protection components of the air conditioning system is decreased, and the overload protection control of the air conditioning system is simplified.

Therefore, through the integrated arrangement, the serial arrangement and the like of the first overload protection mechanism and the second overload protection mechanism, various control modes such as integrated control and linkage control of overload protection of pressure, temperature, current and the like may be realized. The control process is simpler, and the control structure is simpler.

According to the invention the overload protection device comprises the housing 30.

In an optional example, the first overload protection mechanism 10 and the second overload protection mechanism 20 are adaptively installed in the housing 30, respectively.

In an optional example, the housing 30 is filled with an inert gas.

For example, the housing 30 is filled with an inert gas such as helium gas or neon gas and the like to provide arc extinguishing and heat conduction protection for at least one of the first overload protection mechanism 10 or the second overload protection mechanism 20.

For example, the pressure, temperature and current overload protector is filled with an inert gas to achieve arc extinguishing and heat conduction.

Thus, through the adaptive arrangement of the housing, the first overload protection mechanism and the second overload protection mechanism may be accommodated and protected. The adaptive arrangement of the housing is also beneficial for improving the reliability and safety of the overload protection and the operation of the compressor.

Optionally, the base 31 may comprise a base 31 and a shell cover 32.

More optionally, the base 31 may comprise a heat resistant resin base.

More optionally, the shell cover 32 may comprise a metal shell.

For example, in the internal structure of such a pressure, temperature and current overload protector, a pressure controller, the heater and the metal contact piece may be disposed in the metal shell in a shape of cylinder or quadrangular prism and the heat resistant resin (for example, high temperature resistant resin) base. The pressure controller may be a pressure overload protector.

Thus, by using heat resistant resin material as the base and using metal material as the shell cover, it is beneficial for improving the safety and the reliability of the protection of the first overload protection mechanism and the second overload protection mechanism.

A large number of tests and verification prove that, the technical solutions of the present embodiment, in which the overload protections of pressure, temperature, current and the like are integrated, solve the problems that the air conditioning system has excessive overload protectors and that the overload protection control is complicated, and make the control process simple.

According to the present invention, an overload protection method corresponding to the overload protection device is also provided. The overload protection method comprises: providing overload protection for the pressure of the compressor to be protected by using the overload protection device described above; and providing overload protection for temperature and current of the compressor to be protected by using the overload protection device described above.

For example, in the air conditioning system, the overload protector replaces the temperature and current overload protectors in the compressor and the pressure controller disposed on the pipeline between exhausting gases and a condenser. In a refrigeration or heating mode, if the current of a motor passing through the compressor continues to be too high, the heater in the overload protector will generate heat. The bimetal piece is heated to deform to disconnect from the temperature contact to make the overload protector turn off.

For example, the overload protection device may be an integrated pressure, temperature and current overload protector for air conditioner. The overload protector may integrate the overload protection of pressure, temperature, current and the like, thereby solving the problems that the air conditioning system has excessive overload protectors and that the overload protection control is complicated.

Thus, by means of the pressure protection of the first overload protection mechanism, and the protection of at least one of the temperature or the current of the second overload protection mechanism, the overload protection of pressure, temperature, current and the like may be integrated. The problems that the air conditioning system has excessive overload protectors and that the overload protection control is complicated are solved. The control process is simplified, and the structure is also simplified.

In an optional example, providing overload protection for the pressure of the compressor to be protected may comprise: in a case where the pressure of refrigerant vapor at the exhaust end of the compressor to be protected exceeds a set pressure range, the pressure diaphragm 12 in the first overload protection mechanism 10 deforms to force the transmission rod 13 to move to turn off the control switch, thus achieving the pressure overload protection of the refrigerant vapor of the compressor to be protected.

Thus, by means of the adaptive arrangement of the pressure diaphragm, the transmission rod and the control switch, pressure overload protection may be realized. Furthermore, the structure is simple, and the control reliability is high.

In an example, the providing overload protection for at least one of temperature or current of the compressor to be protected may comprise: in a case where an environment temperature of the compressor to be protected exceeds a set temperature range, a temperature contact piece 22 in the second overload protection mechanism 20 deforms to disconnect from the temperature contact 23, thus achieving the temperature overload protection of the compressor to be protected.

In an example, the performing overload protection on at least one of temperature and current of the compressor to be protected may further comprise: in a case where the current of a motor of the compressor to be protected exceeds a set current range, a heater 21 in the second overload protection mechanism 20 generates heat to deform the temperature contact piece 22 to make the temperature contact piece 22 disconnect from the temperature contact 23, thus achieving the current overload protection of the compressor to be protected.

For example, in a refrigeration mode, in a case where the external environment is too high and exceeds the allowable use range, or a condenser is dirty, or the rotating speed of a draught fan at high pressure side is too low, the exhaust gas temperature will increase, or the exhaust gas pressure will rise. In a case where the exhaust gas temperature rises to the maximum allowable upper temperature limit (for example, the allowable use range of the exhaust gas temperature may be 105° C -135° C), or the exhaust gas pressure exceeds the maximum allowable upper pressure limit (for example, the allowable use range of the exhaust gas pressure may be 3.8 MPa-4.8 MPa) of the system, the control switch is turned off, or the bimetal piece is heated to deform to disconnect from the temperature contact. Thus, the overload protector will turn off to make the compressor stop running to protect the motor of the compressor, the housing of the compressor and the system pipeline from being damaged by high temperature or high pressure.

For example, in a heating mode, in a case where the exhaust gas temperature exceeds the maximum allowable temperature upper limit (105° C-135° C), or the exhaust gas pressure exceeds the maximum allowable pressure upper limit (3.8 MPa-4.8 MPa) of the system, the overload protector will turn off to make the compressor stop running to protect the motor of the compressor, the housing of the compressor and the system pipeline from being damaged by high temperature or high pressure.

Thus, through the adaptive arrangement of the heater and the temperature contact piece, the overload protection of current and temperature may be realized. The structure is simple, and the reliability is high.

In an optional embodiment, the overload protection method may further comprise: only in a case where the pressure of refrigerant vapor does not exceed the set pressure range, the environment temperature does not exceed the set temperature range, and the current of the motor does not exceed the set current range, the compressor to be protected is powered and running.

For example, such an integrated pressure, temperature and current overload protector is a serial overload protector. As long as one of the pressure, the current and the temperature exceeds corresponding allowable use range, the overload protector will turn off. Only in a case where the pressure, the current and the temperature are each recovered to be within corresponding allowable use range, the overload protector will be turned on again.

For example, the overload protector may be disposed in the compressor of an air conditioner. After the compressor of the air conditioner is turned on, in a case where the temperature of the external environment is within the allowable range, and the exhaust gas pressure and the current of the motor of the compressor are normal, the overload protector does not disconnect, and the compressor may run normally.

Therefore, through the integrated arrangement, the serial arrangement and the like of the first overload protection mechanism and the second overload protection mechanism, various control modes such as integrated control and linkage control of overload protection of pressure, temperature, current and the like may be realized. The control process is simpler, and the control structure is simpler.

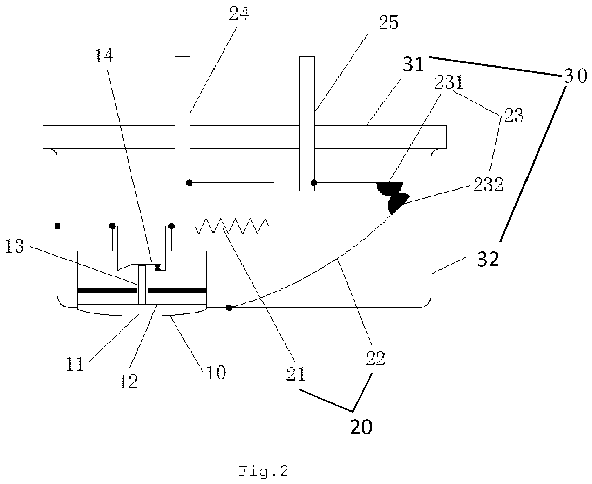

The processing and functions implemented by the method of the embodiments substantially correspond to those of the foregoing embodiments, principles and examples of the device shown in Fig. 1 to Fig. 2. Therefore, for parts that are not described in detail in the description of the method of the embodiments, reference may be made to relevant description in the foregoing embodiments, and no repeated description is given herein.

A large number of tests and verification prove that, the technical solutions of the present embodiment, in which the overload protections of pressure, temperature, current and the like are integrated, reduce the number of overload protection components of the air conditioning system and solve the problem that the air conditioning system has excessive overload protectors.

According to the embodiment of the present application, a storage medium corresponding to the overload protection method is also provided. A plurality of instructions is stored in the storage medium, and the plurality of instructions are configured to be loaded by a processor to execute the overload protection method described above.

The processing and functions implemented by the storage medium of the embodiments substantially correspond to those of the foregoing embodiments, principles and examples of the method. Therefore, for parts that are not described in detail in the description of the storage medium of the embodiments, reference may be made to relevant description in the foregoing embodiments, and no repeated description is given herein.

A large number of tests and verification prove that, the technical solutions of the present embodiment, in which the overload protections of pressure, temperature, current and the like are integrated, may simplify the overload protection control of the air conditioning system and solve the problem that the overload protection control of the air conditioning system is cumbersome.

According to the present invention, a compressor corresponding to the overload protection device or the overload protection method is also provided. The compressor comprises the overload protection device described above. Or, the compressor comprises a memory configured to store a plurality of instructions; and a processor configured to load the plurality of instructions stored in the memory to execute the overload protection method described above.

Optionally, the compressor may comprise a rotor type invariable frequency compressor or a vortex type invariable frequency compressor.

For example, the overload protector may be disposed in a top shell or a high pressure chamber of the rotor type invariable frequency compressor or the vortex type invariable frequency compressor.

Optionally, the overload protection device is adaptively installed in the top shell or the high pressure chamber of the compressor and is connected in series with a main circuit of the motor of the compressor.

For example, such an overload protector is adapted to be installed in the rotor type invariable frequency compressor or other compressors (for example, a vortex type compressor and the like) with different operation modes. For example, such an overload protector is installed at the top or in the high pressure chamber of the compressor, that is, installed at a high pressure side, and connected in series with the main circuit of the motor of the compressor.

The processing and functions implemented by the compressor of the embodiments substantially correspond to those of the foregoing embodiments, principles and examples of the method. Therefore, for parts that are not described in detail in the description of the compressor of the embodiments, reference may be made to relevant description in the foregoing embodiments, and no repeated description is given herein.

A large number of tests and verification prove that, the technical solutions of the present embodiment, in which the overload protections of pressure, temperature, current and the like are integrated, may solve the problem that the air conditioning system has complicated and numerous parts and components. The structure is simplified, and the cost is reduced.

According to the present invention, an electric appliance corresponding to the compressor is also provided. The appliance comprises the compressor described above.

Optionally, the electrical appliance comprises at least one of an air conditioner, a refrigerator, or a water heater.

In an optional embodiment, the overload protection device used by the air conditioner may be an integrated pressure, temperature and current overload protector for air conditioner. The overload protector may integrate the overload protection of pressure, temperature, current and the like, thereby solving the problems that the air conditioning system has excessive overload protectors and that the overload protection control is complicated.

In such a pressure, temperature and current overload protector, the pressure controller, the heater and the metal contact piece may be installed in the metal shell in a shape of the cylinder or quadrangular prism and the heat resistant resin (for example, high temperature resistant resin) base. The pressure controller may be a pressure overload protector.

In an optional example, the pressure sensing port of the pressure overload protector communicates with the outside, and other positions of the pressure overload protector other than the pressure sensing port are all sealed.

In an optional example, the pressure, temperature and current overload protector is filled with an inert gas to achieve arc extinguishing and heat conduction.

In an optional example, the metal contact piece may comprise a bimetal piece (or a trimetal piece). The functions of the bimetal piece and the trimetal piece are the same, and the trimetal piece is more sensitive. As a result, the trimetal piece gradually replaces the bimetal piece.

since the bimetal piece or the trimetal piece is formed by laminating two or three metals with different thermal expansion coefficients, one side of the bimetal piece or the trimetal piece is bent, due to the difference of extension caused by the different thermal expansion coefficients during heating, to connect to or disconnect from the temperature contact point. In a case where the external temperature of the overload protector is abnormally high, and exceeds the maximum allowable temperature, the temperature and the deformation of the bimetal piece (or the trimetal piece) increases, so that the bimetal piece disconnects from the temperature contact. In a case where the temperature is lower than a set lower temperature limit, the bimetal piece connects to the temperature contact.

In an optional example, the heater itself is a resistance wire, which generates heat due to the thermal effect of the current. It can be seen from P=I²*R that in a case where the voltage is constant and the current I increases, the heating power P of the resistance wire increases. In a case where the current reaches the maximum allowable current, the heat generated by the resistance wire makes a bimetal piece or a trimetal piece deform and disconnect from a temperature contact.

Optionally, the high pressure refrigerant vapor acts on the metal pressure diaphragm through the pressure sensing port to deform the diaphragm. The deformed diaphragm forces the transmission rod to move, thus turning on or turning off the microswitch.

In an optional example, such an integrated pressure, temperature and current overload protector is a serial overload protector. As long as one of the pressure, the current and the temperature exceeds corresponding allowable use range, the overload protector will turn off. Only in a case where the pressure, the current and the temperature are each recovered to be within corresponding allowable use range, the overload protector will be turned on again.

In an optional example, such an overload protector is adapted to be installed in the rotor type invariable frequency compressor or other compressors (for example, a vortex type compressor and the like) with different operation modes. For example, such an overload protector is installed at the top or in the high pressure chamber of the compressor, that is, installed at a high pressure side, and connected in series with the main circuit of the motor of the compressor.

Optionally, the overload protector may be applied to be in the interior of the top shell or the high pressure chamber of the rotor type invariable frequency compressor and the vortex type invariable frequency compressor.

In an optional embodiment, the overload protector may be disposed in the compressor of an air conditioner. After the compressor of the air conditioner is turned on, in a case where the temperature of the external environment is within the allowable range, and the exhaust gas pressure and the current of the motor of the compressor are normal, the overload protector does not disconnect, and the compressor may run normally.

In an optional example, in a refrigeration mode, in a case where the external environment is too high and exceeds the allowable use range, or a condenser is dirty, or the rotating speed of a draught fan at high pressure side is too low, the exhaust gas temperature will increase, or the exhaust gas pressure will rise. In a case where the exhaust gas temperature rises to the maximum allowable upper temperature limit (for example, the allowable use range of the exhaust gas temperature may be 105° C -135° C), or the exhaust gas pressure exceeds the maximum allowable upper pressure limit (for example, the allowable use range of the exhaust gas pressure may be 3.8 MPa-4.8 MPa) of the system, the control switch is turned off, or the bimetal piece is heated to deform to disconnect from the temperature contact. Thus, the overload protector will turn off to make the compressor stop running to protect the motor of the compressor, the housing of the compressor and the system pipeline from being damaged by high temperature or high pressure.

In an optional example, in a heating mode, in a case where the exhaust gas temperature exceeds the maximum allowable temperature upper limit (105° C-135° C), or the exhaust gas pressure exceeds the maximum allowable pressure upper limit (3.8 MPa-4.8 MPa) of the system, the overload protector will turn off to make the compressor stop running to protect the motor of the compressor, the housing of the compressor and the system pipeline from being damaged by high temperature or high pressure.

In an optional example, in a refrigeration or heating mode, if the current of a motor passing through the compressor continues to be too high, the heater in the overload protector will generate heat. The bimetal piece is heated to deform to disconnect from the temperature contact to make the overload protector turn off.

It can be seen that in the air conditioning system, such an overload protector replaces the temperature and current overload protectors in the compressor and the pressure controller disposed on the pipeline between exhausting gases and a condenser.

The processing and functions implemented by the electric appliance of the embodiments substantially correspond to those of the foregoing embodiments, principles and examples of the compressor. Therefore, for parts that are not described in detail in the description of the electric appliance of the embodiments, reference may be made to relevant description in the foregoing embodiments, and no repeated description is given herein.

A large number of tests and verification prove that, in the technical solutions of the present application, the overload protector integrating the overload protection of pressure, temperature and current and the like replaces the temperature and current overload protectors and the pressure controller disposed on the pipeline between exhausting gases and a condenser in the air conditioning system. The protection structure and the protection process of the air conditioning system are simplified, and the user experience is improved.

In summary, those skilled in the art will readily understand that the above advantageous modes may be freely combined and superimposed without conflict.

### Industrial Applicability

In the technical solutions of the present application, by means of the integrated arrangement of the overload protection structure of pressure, temperature and current, the problem that the air conditioning system needs to use at least two overload protectors to protect complete machine protection is solved. The defects of a cumbersome control process, complicated structure and high cost in the prior art are accordingly overcome, and the beneficial effects of simple control process, simple structure and low cost are achieved.

## Claims

1. An overload protection device, comprising: a housing (30), and a first overload protection mechanism (10) and a second overload protection mechanism (20) which are installed in the housing (30), respectively, wherein
the first overload protection mechanism (10) is configured to provide overload protection for a pressure of a compressor to be protected, and comprises a pressure diaphragm (12), a pressure sensing port (11) disposed at a position of the housing (30) opposite to the pressure diaphragm (12), a transmission rod (13) and a control switch; and
the second overload protection mechanism (20) is configured to provide overload protection for a temperature and a current of the compressor to be protected, and comprises a heater (21) and a temperature contact piece (22), wherein:
a first end of the transmission rod (13) is in contact with the pressure diaphragm (12);
a second end of the transmission rod (13) is in contact with a control end of the control switch;
at least one fixed end of the control switch is connected to a power supply end of the compressor to be protected through the heater (21);
the pressure sensing port (11) is configured to allow refrigerant vapor of an exhaust end of the compressor to be protected to pass through and arrive at the pressure diaphragm (12), wherein the refrigerant vapor deforms the pressure diaphragm (12) to force the transmission rod (13) to move so as to turn on or turn off the control switch;
at least one contact end of the temperature contact piece (22) is connected to the power supply end of the compressor to be protected through a temperature contact (23);
the heater (21) is configured to, in a case where the current of a motor of the compressor to be protected exceeds a set current range, generate heat to deform the temperature contact piece (22) to make the temperature contact piece (22) disconnect from the temperature contact (23), such that the overload protection device turns off to make the compressor to be protected stop running;
**characterised in that**
a first contact end of the temperature contact piece (22) is contact with a shell wall of a shell cover (32) of the housing (30), and the temperature contact piece (22) is configured to, in a case where an environment temperature of the compressor to be protected exceeds a set temperature range, deform to disconnect from the temperature contact (23), such that the overload protection device turns off to make the compressor to be protected stop running.

2. The overload protection device according to claim 1, wherein the housing (30) is filled with an inert gas.

3. The overload protection device according to claim 1, wherein the pressure sensing port (11) communicates with an external environment of the first overload protection mechanism (10), and other parts of the first overload protection mechanism (10) other than the pressure sensing port (11) are all sealed.

4. The overload protection device according to claims 1 or 2, wherein:
the pressure diaphragm (12) comprises a metal diaphragm;
the control switch comprises a microswitch (14); and
the housing (30) comprises a base (31) and the shell cover (32), wherein:
the base (31) comprises a heat resistant resin base, and/or,
the shell cover (32) comprises a metal shell.

5. The overload protection device according to any one of claims 1-4, wherein the second overload protection mechanism (20) further comprises: a first terminal (24) and a second terminal (25), wherein:
the first terminal (24) and the second terminal (25) are connected to the power supply end of the compressor to be protected, respectively;
a first connection end of the heater (21) is connected to the fixed end of the control switch of the first overload protection mechanism (10), and a second connection end of the heater (21) is connected to the first terminal (24); and
a first contact end of the temperature contact piece (22) is fixedly disposed, and a second contact end of the temperature contact piece (22) is connected to the second terminal (25) through the temperature contact (23).

6. The overload protection device according to claim 5, wherein:
the heater (21) comprises a resistance wire; or
the temperature contact piece (22) comprises a bimetal piece or a trimetal piece, the temperature contact piece (22) is configured to deform when being heated, based on at least one of an environment temperature of the compressor to be protected or the current of the motor of the compressor to be protected, to connect to or disconnect from the temperature contact (23); or
the temperature contact (23) comprises a stationary contact (231) and a movable contact (232), wherein the stationary contact (231) is connected to one end of the second terminal (25), and the movable contact (232) is connected to the second contact end of the temperature contact (22).

7. The overload protection device according to claim 5, wherein the first terminal (24) and the second terminal (25) are respectively inserted into a base (31) of the housing (30) and protrude from the housing (30).

8. The overload protection device according to claim 1, wherein the shell cover (32) is in a shape of a cylinder or a quadrangular prism.

9. An overload protection method by using the overload protection device according to any one of claims 1-8, comprising:
providing overload protection for a pressure of a compressor to be protected; and,
providing overload protection for a temperature and a current of the compressor to be protected.

10. The overload protection method according to claim 9, wherein:
providing overload protection for the pressure of the compressor to be protected comprises:
in a case where the pressure of refrigerant vapor from an exhaust end of the compressor to be protected exceeds a set pressure range, a pressure diaphragm (12) in the first overload protection mechanism (10) deforms to force the transmission rod (13) to move to turn off the control switch, so as to provide overload protection for the pressure of refrigerant vapor of the compressor to be protected; and
providing overload protection for at least one of the temperature or the current of the compressor to be protected comprises:
in a case where an environment temperature of the compressor to be protected exceeds a set temperature range, a temperature contact piece (22) in the second overload protection mechanism (20) deforms to disconnect from the temperature contact (23), so as to provide overload protection for the temperature of the compressor to be protected, or,
in a case where the current of a motor of the compressor to be protected exceeds a set current range, a heater (21) in the second overload protection mechanism (20) generates heat to deform the temperature contact piece (22) and disconnect from the temperature contact (23), so as to provide overload protection for the current of the compressor to be protected.

11. The overload protection method according to claims 9 or 10, further comprising:
in a case where the pressure of refrigerant vapor does not exceed the set pressure range, an environment temperature does not exceed the set temperature range, and the current of the motor does not exceed the set current range, the compressor to be protected is powered and running.

12. A storage medium in which a plurality of instructions is stored, wherein the plurality of instructions is configured to be loaded by a processor to execute the overload protection method according to any one of claims 9-11.

13. A compressor, comprising:
the overload protection device according to any one of claims 1-8; or,
the compressor comprising:
a memory configured to store a plurality of instructions; and
a processor configured to load the plurality of instructions to execute the overload protection method according to any one of claims 9-11.

14. The compressor according to claim 13, wherein:
the compressor comprises a rotor type invariable frequency compressor or a vortex type invariable frequency compressor; and
the overload protection device is installed in a top shell or a high pressure chamber of the compressor and is connected in series with a main circuit of a motor of the compressor.

15. An electric appliance, comprising: the compressor according to claims 13 or 14;
wherein the electrical appliance comprises at least one of an air conditioner, a refrigerator or a water heater.

## Patentansprüche

1. Überlastschutzvorrichtung, umfassend: ein Gehäuse (30) und einen ersten Überlastschutzmechanismus (10) und einen zweiten Überlastschutzmechanismus (20), die jeweilig in das Gehäuse (30) eingebaut sind, wobei
der erste Überlastschutzmechanismus (10) zum Bereitstellen von Überlastschutz für einen Druck eines zu schützenden Kompressors konfiguriert ist und eine Druckmembran (12), einen Druckmessanschluss (11), der an einer der Druckmembran (12) entgegengesetzten Position des Gehäuses (30) angeordnet ist, einen Übertragungsstab (13) und einen Steuerschalter umfasst; und
der zweite Überlastschutzmechanismus (20) zum Bereitstellen von Überlastschutz für eine Temperatur und einen Strom des zu schützenden Kompressors konfiguriert ist und eine Heizvorrichtung (21) und ein Temperaturkontaktstück (22) umfasst, wobei:
ein erstes Ende des Übertragungsstabs (13) mit der Druckmembran (12) in Kontakt ist;
ein zweites Ende des Übertragungsstabs (13) mit einem Steuerende des Steuerschalters in Kontakt ist;
wenigstens ein festes Ende des Steuerschalters durch die Heizvorrichtung (21) mit einem Stromversorgungsende des zu schützenden Kompressors verbunden ist;
der Druckmessanschluss (11) zum Durchlassen durch die und Ankommenlassen an der Druckmembran (12) von Kältemitteldampf eines Auslassendes des zu schützenden Kompressors konfiguriert ist, wobei der Kältemitteldampf die Druckmembran (12) verformt, um den Übertragungsstab (13) zu zwingen, sich zu bewegen, so dass der Steuerschalter ausgeschaltet oder eingeschaltet wird;
wenigstens ein Kontaktende des Temperaturkontaktstücks (22) durch einen Temperaturkontakt (23) mit dem Stromversorgungsende des zu schützenden Kompressors verbunden ist;
die Heizvorrichtung (21) in einem Fall, in dem der Strom eines Motors des zu schützenden Kompressors einen eingestellten Strombereich überschreitet, konfiguriert ist zum Erzeugen von Wärme zum Verformen des Temperaturkontaktstücks (22), um zu bewirken, dass sich das Temperaturkontaktstück (22) vom Temperaturkontakt (23) trennt, so dass sich die Überlastschutzvorrichtung ausschaltet, um zu bewirken, dass der zu schützende Kompressor zum Stillstand gebracht wird;
**dadurch gekennzeichnet, dass**
ein erstes Kontaktende des Temperaturkontaktstücks (22) mit einer Schalenwand einer Schalenabdeckung (32) des Gehäuses (30) in Kontakt ist und das Temperaturkontaktstück (22) in einem Fall, in dem eine Umgebungstemperatur des zu schützenden Kompressors einen eingestellten Temperaturbereich überschreitet, konfiguriert ist zum Verformen, um sich vom Temperaturkontakt (23) zu trennen, so dass sich die Überlastschutzvorrichtung ausschaltet, um zu bewirken, dass der zu schützende Kompressor zum Stillstand gebracht wird.

2. Überlastschutzvorrichtung nach Anspruch 1, wobei das Gehäuse (30) mit einem Inertgas gefüllt ist.

3. Überlastschutzvorrichtung nach Anspruch 1, wobei der Druckmessanschluss (11) mit einer äußeren Umgebung des ersten Überlastschutzmechanismus (10) kommuniziert und andere Teile des ersten Überlastschutzmechanismus (10) außer dem Druckmessanschluss (11) alle abgedichtet sind.

4. Überlastschutzvorrichtung nach Anspruch 1 oder 2, wobei:
die Druckmembran (12) eine Metallmembran umfasst;
der Steuerschalter einen Mikroschalter (14) umfasst; und
das Gehäuse (30) einen Boden (31) und die Schalenabdeckung (32) umfasst, wobei:
der Boden (31) einen wärmebeständige Kunstharzboden umfasst und/oder
die Schalenabdeckung (32) eine Metallschale umfasst.

5. Überlastschutzvorrichtung nach einem der Ansprüche 1 bis 4, wobei der zweite Überlastschutzmechanismus (20) ferner umfasst:
einen ersten Anschluss (24) und einen zweiten Anschluss (25),
wobei:
der erste Anschluss (24) und der zweite Anschluss (25) jeweilig mit dem Stromversorgungsende des zu schützenden Kompressors verbunden sind;
ein erstes Verbindungsende der Heizvorrichtung (21) mit dem festen Ende des Steuerschalters des ersten Überlastschutzmechanismus (10) verbunden ist und ein zweites Verbindungsende der Heizvorrichtung (21) mit dem ersten Anschluss (24) verbunden ist; und
ein erstes Kontaktende des Temperaturkontaktstücks (22) fest angeordnet ist und ein zweites Kontaktende des Temperaturkontaktstücks (22) durch den Temperaturkontakt (23) mit dem zweiten Anschluss (25) verbunden ist.

6. Überlastschutzvorrichtung nach Anspruch 5, wobei:
die Heizvorrichtung (21) einen Widerstandsdraht umfasst; oder
das Temperaturkontaktstück (22) ein Bimetallstück oder ein Trimetallstück umfasst, wobei das Temperaturkontaktstück (22) so konfiguriert ist, dass es sich bei Erwärmung auf Basis von einer Umgebungstemperatur des zu schützenden Kompressors und/oder dem Strom des Motors des zu schützenden Kompressors verformt, um sich mit dem Temperaturkontakt (23) zu verbinden oder sich von ihm zu trennen; oder
der Temperaturkontakt (23) einen feststehenden Kontakt (231) und einen beweglichen Kontakt (232) umfasst, wobei der feststehende Kontakt (231) mit einem Ende des zweiten Anschlusses (25) verbunden ist und der bewegliche Kontakt (232) mit dem zweiten Kontaktende des Temperaturkontakts (22) verbunden ist.

7. Überlastschutzvorrichtung nach Anspruch 5, wobei der erste Anschluss (24) und der zweite Anschluss (25) jeweils in einen Boden (31) des Gehäuses (30) gesteckt sind und aus dem Gehäuse (30) ragen.

8. Überlastschutzvorrichtung nach Anspruch 1, wobei die Schalenabdeckung (32) die Form eines Zylinders oder eines viereckigen Prismas hat.

9. Überlastschutzverfahren unter Verwendung der Überlastschutzvorrichtung nach einem der Ansprüche 1 bis 8, umfassend:
Bereitstellen von Überlastschutz für einen Druck eines zu schützenden Kompressors; und
Bereitstellen von Überlastschutz für eine Temperatur und einen Strom des zu schützenden Kompressors.

10. Überlastschutzverfahren nach Anspruch 9, wobei:
das Bereitstellen von Überlastschutz für den Druck des zu schützenden Kompressors umfasst:
in einem Fall, in dem der Druck von Kältemitteldampf aus einem Auslassende des zu schützenden Kompressors einen eingestellten Druckbereich überschreitet, verformt sich eine Druckmembran (12) im ersten Überlastschutzmechanismus (10), um den Übertragungsstab (13) zu zwingen, sich zu bewegen, so dass der Steuerschalter ausgeschaltet wird, um Überlastschutz für den Kältemitteldampfdruck des zu schützenden Kompressors bereitzustellen; und
das Bereitstellen von Überlastschutz für die Temperatur und/oder den Strom des zu schützenden Kompressors umfasst:
in einem Fall, in dem eine Umgebungstemperatur des zu schützenden Kompressors einen eingestellten Temperaturbereich überschreitet, verformt sich ein Temperaturkontaktstück (22) im zweiten Überlastschutzmechanismus (20), um sich vom Temperaturkontakt (23) zu trennen, um Überlastschutz für die Temperatur des zu schützenden Kompressors bereitzustellen, oder,
in einem Fall, in dem der Strom eines Motors des zu schützenden Kompressors einen eingestellten Strombereich überschreitet, erzeugt eine Heizvorrichtung (21) im zweiten Überlastschutzmechanismus (20) Wärme zum Verformen des Temperaturkontaktstücks (22) und zum Trennen von dem Temperaturkontakt (23), um Überlastschutz für den Strom des zu schützenden Kompressors bereitzustellen.

11. Überlastschutzverfahren nach Anspruch 9 oder 10, ferner umfassend:
in einem Fall, in dem der Kältemitteldampfdruck den eingestellten Druckbereich nicht überschreitet, eine Umgebungstemperatur den eingestellten Temperaturbereich nicht überschreitet und der Strom des Motors den eingestellten Strombereich nicht überschreitet, wird der zu schützende Kompressor mit Strom versorgt und läuft.

12. Speichermedium, in dem eine Vielzahl von Anweisungen gespeichert wird, wobei die Vielzahl von Anweisungen konfiguriert ist, um von einem Prozessor zum Ausführen des Überlastschutzverfahrens nach einem der Ansprüche 9 bis 11 geladen zu werden.

13. Kompressor, umfassend:
Überlastschutzvorrichtung nach einem der Ansprüche 1 bis 8; oder
Kompressor, umfassend:
einen Speicher, der zum Speichern einer Vielzahl von Anweisungen konfiguriert ist; und
einen Prozessor, der zum Laden der Vielzahl von Anweisungen zum Ausführen des Überlastschutzverfahrens gemäß einem der Ansprüche 9 bis 11 konfiguriert ist.

14. Kompressor nach Anspruch 13, wobei:
der Kompressor einen Kompressor gleichbleibender Frequenz des Rotortyps oder einen Kompressor gleichbleibender Frequenz des Wirbeltyps umfasst; und
die Überlastschutzvorrichtung in einer oberen Schale oder einer Hochdruckkammer der Kammer des Kompressors installiert ist und mit einer Hauptschaltungsanordnung eines Motors des Kompressors in Reihe geschaltet ist.

15. Elektrogerät, umfassend: den Kompressor gemäß einem der Ansprüche 13 oder 14;
wobei das Elektrogerät wenigstens eines von einer Klimaanlage, einer Kühleinrichtung oder einem Warmwasserbereiter umfasst.

## Revendications

1. Dispositif de protection contre les surcharges, comprenant : un boîtier (30), et un premier mécanisme de protection contre les surcharges (10) et un deuxième mécanisme de protection contre les surcharges (20) qui sont installés dans le boîtier (30), respectivement, dans lequel
le premier mécanisme de protection contre les surcharges (10) est configuré pour fournir une protection contre les surcharges d'une pression d'un compresseur à protéger, et comprend un diaphragme de pression (12), un orifice de détection de pression (11) disposé à une position du boîtier (30) opposée au diaphragme de pression (12), et une tige de transmission (13) et un commutateur de commande ; et
le deuxième mécanisme de protection contre les surcharges (20) est configuré pour fournir une protection contre les surcharges d'une température et d'un courant du compresseur à protéger, et comprend un élément chauffant (21) et une pièce de contact de température (22), dans lequel :
une première extrémité de la tige de transmission (13) est en contact avec le diaphragme de pression (12) ;
une deuxième extrémité de la tige de transmission (13) est en contact avec une extrémité de commande du commutateur de commande ;
au moins une extrémité fixe du commutateur de commande est connectée à une extrémité d'alimentation en puissance du compresseur à protéger par l'élément chauffant (21) ;
l'orifice de détection de pression (11) est configuré pour permettre à de la vapeur de réfrigérant d'une extrémité d'échappement du compresseur à protéger de passer à travers et d'arriver au diaphragme de pression (12), dans lequel la vapeur de réfrigérant déforme le diaphragme de pression (12) pour forcer la tige de transmission (13) à se déplacer de manière à mettre en circuit ou à mettre hors circuit le commutateur de commande ;
au moins une extrémité de contact de la pièce de contact de température (22) est connectée à l'extrémité d'alimentation en puissance du compresseur à protéger par un contact de température (23) ;
l'élément chauffant (21) est configuré pour, dans un cas dans lequel le courant d'un moteur du compresseur à protéger dépasse une plage de courant consignée, générer de la chaleur pour déformer la pièce de contact de température (22) pour faire que la pièce de contact de température (22) se déconnecte du contact de température (23), de sorte que le dispositif de protection contre les surcharges se met hors circuit pour faire que le compresseur à protéger s'arrête de fonctionner ;
**caractérisé en ce que**
une première extrémité de contact de la pièce de contact de température (22) est en contact avec une paroi de caisse d'un recouvrement de caisse (32) du boîtier (30), et la pièce de contact de température (22) est configurée pour, dans un cas dans lequel une température ambiante du compresseur à protéger dépasse une plage de température consignée, se déformer pour se déconnecter du contact de température (23), de sorte que le dispositif de protection contre les surcharges se met hors circuit pour faire que le compresseur à protéger s'arrête de fonctionner.

2. Dispositif de protection contre les surcharges selon la revendication 1, dans lequel le boîtier (30) est rempli d'un gaz inerte.

3. Dispositif de protection contre les surcharges selon la revendication 1, dans lequel l'orifice de détection de pression (11) communique avec un environnement extérieur du premier mécanisme de protection contre les surcharges (10), et d'autres parties du premier mécanisme de protection contre les surcharges (10), autres que l'orifice de détection de pression (11), sont toutes scellées.

4. Dispositif de protection contre les surcharges selon les revendications 1 ou 2, dans lequel :
le diaphragme de pression (12) comprend un diaphragme métallique ;
le commutateur de commande comprend un micro-commutateur (14) ; et
le boîtier (30) comprend une base (31) et le recouvrement de caisse (32),
dans lequel :
la base (31) comprend une base en résine résistante à la chaleur, et/ou,
le recouvrement de caisse (32) comprend une caisse métallique.

5. Dispositif de protection contre les surcharges selon l'une quelconque des revendications 1-4, dans lequel le deuxième mécanisme de protection contre les surcharges (20) comprend en outre : une première borne (24) et une deuxième borne (25), dans lequel :
la première borne (24) et la deuxième borne (25) sont connectées à l'extrémité d'alimentation en puissance du compresseur à protéger, respectivement ;
une première extrémité de connexion de l'élément chauffant (21) est connectée à l'extrémité fixe du commutateur de commande du premier mécanisme de protection contre les surcharges (10), et une deuxième extrémité de connexion de l'élément chauffant (21) est connectée à la première borne (24) ; et
une première extrémité de contact de la pièce de contact de température (22) est disposée de manière fixe, et une deuxième extrémité de contact de la pièce de contact de température (22) est connectée à la deuxième borne (25) par le contact de température (23).

6. Dispositif de protection contre les surcharges selon la revendication 5, dans lequel :
l'élément chauffant (21) comprend un fil de résistance ; ou
la pièce de contact de température (22) comprend une pièce bimétallique ou une pièce de trimétal, la pièce de contact de température (22) est configurée pour se déformer lorsque chauffée, sur la base d'au moins l'un d'entre une température ambiante du compresseur à protéger ou du courant du moteur du compresseur à protéger, pour se connecter au ou se déconnecter du contact de température (23) ; ou
le contact de température (23) comprend un contact stationnaire (231) et un contact amovible (232), dans lequel le contact stationnaire (231) est connecté à une extrémité de la deuxième borne (25), et le contact amovible (232) est connecté à la deuxième extrémité de contact du contact de température (22).

7. Dispositif de protection contre les surcharges selon la revendication 5, dans lequel la première borne (24) et la deuxième borne (25) sont respectivement insérées dans une base (31) du boîtier (30) et se projettent du boîtier (30).

8. Dispositif de protection contre les surcharges selon la revendication 1, dans lequel le recouvrement de caisse (32) est sous une forme d'un cylindre ou d'un prisme quadrangulaire.

9. Procédé de protection contre les surcharges en utilisant le dispositif de protection contre les surcharges selon l'une quelconque des revendications 1-8, comprenant :
fournir une protection contre les surcharges d'une pression d'un compresseur à protéger ; et
fournir une protection contre les surcharges d'une température et d'un courant du compresseur à protéger.

10. Procédé de protection contre les surcharges selon la revendication 9, dans lequel :
fournir une protection contre les surcharges de la pression du compresseur à protéger comprend :
dans un cas dans lequel la pression de vapeur de réfrigérant d'une extrémité d'échappement du compresseur à protéger dépasse une plage de pression consignée, un diaphragme de pression (12) dans le premier mécanisme de protection contre les surcharges (10) se déforme pour forcer la tige de transmission (13) à se déplacer pour mettre hors circuit le commutateur de commande, de manière à fournir une protection contre les surcharges de la pression de vapeur de réfrigérant du compresseur à protéger ; et
fournir une protection contre les surcharges d'au moins l'un d'entre la température ou le courant du compresseur à protéger comprend :
dans un cas dans lequel une température ambiante du compresseur à protéger dépasse une plage de température consignée, une pièce de contact de température (22) dans le deuxième mécanisme de protection contre les surcharges (20) se déforme pour se déconnecter du contact de température (23), de manière à fournir une protection contre les surcharges de la température du compresseur à protéger, ou,
dans un cas dans lequel le courant d'un moteur du compresseur à protéger dépasse une plage de courant consignée, un élément chauffant (21) dans le deuxième mécanisme de protection contre les surcharges (20) génère de la chaleur pour déformer la pièce de contact de température (22) et déconnecter le contact de température (23), de manière à fournir une protection contre les surcharges du courant du compresseur à protéger.

11. Procédé de protection contre les surcharges selon la revendication 9 ou 10, comprenant en outre :
dans un cas dans lequel la pression de vapeur de réfrigérant ne dépasse pas la plage de pression consignée, une température ambiante ne dépasse pas la plage de température consignée, et le courant du moteur ne dépasse pas la plage de courant consignée, le compresseur à protéger est sous tension et fonctionne.

12. Support de stockage dans lequel une pluralité d'instructions sont stockées, dans lequel la pluralité d'instructions sont configurées pour être chargées par un processeur pour exécuter le procédé de protection contre les surcharges selon l'une quelconque des revendications 9-11.

13. Compresseur, comprenant :
le dispositif de protection contre les surcharges selon l'une quelconque des revendications 1-8 ; ou,
le compresseur comprenant :
une mémoire configurée pour stocker une pluralité d'instructions ; et
un processeur configuré pour charger la pluralité d'instructions pour exécuter le procédé de protection contre les surcharges selon l'une quelconque des revendications 9-11.

14. Compresseur selon la revendication 13, où :
le compresseur comprend un compresseur à fréquence invariable type rotor ou un compresseur à fréquence invariable type vortex ; et
le dispositif de protection contre les surcharges est installé dans une caisse supérieure ou chambre à haute pression du compresseur et est connecté en série avec un circuit principal d'un moteur du compresseur.

15. Appareil électrique, comprenant : le compresseur selon les revendications 13 ou 14;
où l'appareil électrique comprend au moins l'un d'entre un climatiseur, un réfrigérateur ou un chauffe-eau.
